# NEUE EUROPÄISCHE PATENTSCHRIFT

(11) **EP 1 350 888 B2**
(45) Veröffentlichungstag und Bekanntmachung des Hinweises auf die Entscheidung über den Einspruch: **11.04.2012**
(45) Hinweis auf die Patenterteilung: 16.07.2008
(21) Anmeldenummer: 03005104.9
(22) Anmeldetag: 07.03.2003
(51) Int. Cl.: D21F 1/70, D21B 1/32

(54) **Vorrichtung zum Abtrennen von Feststoffen aus Flüssigkeiten mittels Flotation**
Device for separating solids from liquids using flotation
Dispositif pour la séparation solides-liquides par flotation

(30) Priorität: 27.03.2002 AT 4792002
(43) Veröffentlichungstag der Anmeldung: 08.10.2003
(73) Patentinhaber: Andritz AG, 8045 Graz (AT)
(72) Erfinder: Gabl, Helmuth, Dipl.Ing.Dr., 8046 Graz (AT)
(74) Vertreter: Schweinzer, Friedrich

(56) Entgegenhaltungen:
- EP-A1- 0 622 122
- DE-A- 3 120 202
- US-A- 1 598 858
- US-A- 1 732 893
- US-A- 4 726 897
- US-A1- 2001 025 808

## Beschreibung

Die Erfindung betrifft eine Vorrichtung zum Abtrennen von Feststoffen aus Flüssigkeiten mittels Flotation, insbesondere zur Abtrennung von Störstoffen und Druckfarbpartikel aus Faserstoffsuspensionen, mit mehreren Injektoren, die innerhalb einer Flotationszelle vorgesehen sind, wobei die Injektoren in mindestens einer Reihe angeordnet sind.

Die Deinking-Flotation ist ein mechanisches Verfahren zur Abtrennung von Störstoffen und Druckfarbenpartikel aus insbesondere in der Altpapieraufbereitung hergestellten Faserstoffsuspensionen. Dieses Verfahren ist an die Erzeugung von Gasblasen in geeigneter Menge und Größenverteilung gebunden. Bei Änderung der Gas - Liquidströme und Größenverteilung der Blasen können Erze etc. von tauben, nicht brauchbaren Materialen ebenso getrennt werden. Ein ähnliches Prinzip wird bei der Fest - Flüssigtrennung z.B. bei Abwasser verwendet.

Hydrophobe oder mittels oberflächenaktiven Stoffen hydrophobierte Feststoffe wie Druckfarbenpartikel oder Stickies (z.B. auch Kohle als Gutstoff) werden durch die anhaftenden Gasblasen an die Flüssigkeitsoberfläche getragen und können dort als Schaum entfernt werden.

In der Papier- und Zellstoffindustrie hat sich zur Erzeugung von Gasblasen und Durchmischung mit der Faserstoffsuspension der Einsatz von selbstansaugenden Injektoren - prinzipiell bestehend aus Treibstrahldüse, Mischrohr bzw. Impulsaustauschraum und Diffusor - bewährt. Diese Einzeldiffusoren werden meist in runde, kleine Diffusoreinheiten (bis 12 Einzeldiffusoren) zusammengebaut. Am Austritt des zur Energierückgewinnung dienenden Diffusors entsteht eine Faserstoff-Blasen Dispersion.

Vorrichtungen dieser Art sind in zahlreichen geometrischen Modifikationen z.B. aus US 1 598 858 A, DE 41 16 916 C2 oder aus EP 0 211 834 B1, US 2001/0025808 A1 bekannt und haben einen hohen technischen Standard erreicht. Dennoch ergeben sich aus der großindustriellen Anwendung einige Nachteile:

Die Sogwirkung von bekannten Diffusoreinheiten wird beim Erreichen von mehr als acht Injektoren je Einheit negativ beeinflusst, da die innenliegenden Injektoren bedingt durch die Ansaugung der sie umgebenden Injektoren teilweise mit Gas unterversorgt werden. Dies führt infolge der Unterversorgung zu einer geringerer Gesamtgasbeladung. Dies kann zu einer Verblasung des Treibstrahles führen. Die Betriebssicherheit wird dadurch verringert bzw. dadurch verbreitert sich die gewünschte Blasengrößenverteilung, was bei selektiven Flotationen zu einem Abfall des Wirkungsgrades oder einer Erhöhung der Verluste führt.

Der Erfindung liegt daher die Aufgabe zugrunde Flotationszellen aufzubauen, die unabhängig von der Injektoranzahl mit gleicher Sogwirkung und optimaler Blasengrößenverteilung für jeden einzelnen Injektor für die Anwendung in der Flotation, vornehmlich Deinking- und Abwasser-Flotation arbeiten.

Diese Aufgabe wird durch den kennzeichnenden Merkmale des Anspruchs 1 gelöst. Dadurch eine effiziente, leichte Gaszugänglichkeit, die für jede Einzeldüse in gleichem Maße gegeben ist. Dies gilt für alle Injektoren oder Düsen unabhängig von der Anzahl der Ansaugstellen.

Werden mehrere, vorzugsweise zwei bis vier Reihen von Injektoren zu einem Block zusammengefasst, so führt dies zu einer günstigen flächenaufgeteilten Platzierung der Injektoren innerhalb der Flotationszelle und somit zu einem besseren Gesamtströmungskonzept.

Vorteilhafterweise werden die Reihen in axialer Richtung in der Flotationszelle angeordnet. Dadurch wird ein gleichmäßiger Schaumfluss über die gesamte Zellenlänge in Richtung Überlaufkante erreicht. Weiters kann die Absaugung des Gutstoffes bzw. wiederzubelüftenden Stoffes unter Vermeidung weitestgehender Kurzschlussströme durchgeführt werden.

Bei einer Flotationszelle mit einer Schaumrinne werden die Injektorreihen an der der Schaumrinne gegenüberliegenden Seite der Flotationszelle angeordnet, wodurch eine vollständige Durchströmung der gesamten Flotationszelle erreicht wird.

Besonders vorteilhaft hat sich erwiesen, wenn bei einer Flotationszelle mit zwei Schaumrinnen die Injektorreihen in der Mitte der Flotationszelle angeordnet sind. Damit ist eine gleichmäßige Beladung der Überlaufkanten bzw. Schaumrinnen gewährleistet.

Die Erfindung wird nun anhand der Zeichnungen beispielhaft beschrieben, wobei Fig. 1 schematisch die Anwendung der Erfindung, Fig. 2 eine Variante der Erfindung, Fig. 3 den Einbau einer Variante der Erfindung, Fig. 4 a eine erfindungsgemäße Ausführung einer Flotationszelle mit einer Schaumrinne und Fig. 4b eine erfindungsgemäße Ausführung einer Flotationszelle mit zwei Schaumrinnen, Fig. 4c darstellt eine erfindungsgemäße Ausführung einer Flotationszelle mit drei Schaumrinnen und Fig. 5 eine weitere Ausführung gemäß der Erfindung darstellt.

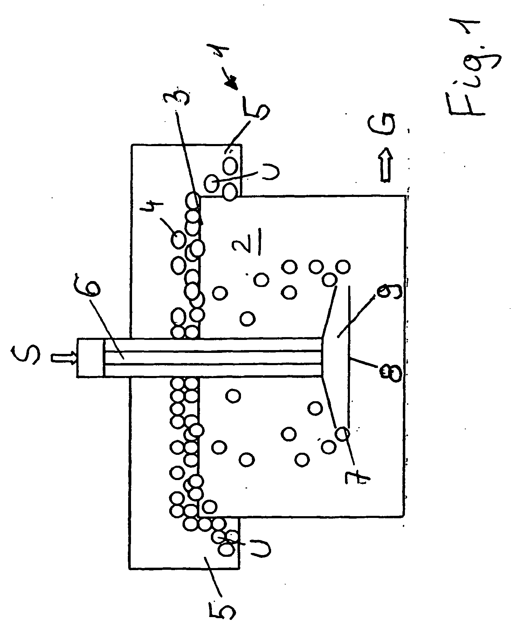

In Fig.1 erkennt man den schematisch dargestellten Flotationsapparat, in dem die erfindungsgemäße Vorrichtung eingebaut ist. Die Flotationszelle 1 ist zum überwiegenden Teil mit Suspension 2 gefüllt, an deren Oberfläche 3 sich ein Schaum 4 bildet, der einen möglichst großen Teil der auszuflotierenden Störstoffe und Druckfarbenpartikel enthält. Der Schaum 4 kann über eine Schaumrinne 5 als Überlauf U abfließen. Die Faserstoffsuspension S gelangt durch die Injektorreihe 6 in die Zelle 1. Die Blasen-Faserstoff Dispersion 7 verlässt nach Auftreffen auf eine Prallplatte 8 den Diffusor 9. Die Blasen haften an den hydrophoben Störstoffen an und tragen sie zur Oberfläche 3. Die gereinigte Suspension tritt als Gutstoff G aus der Flotationszelle aus.

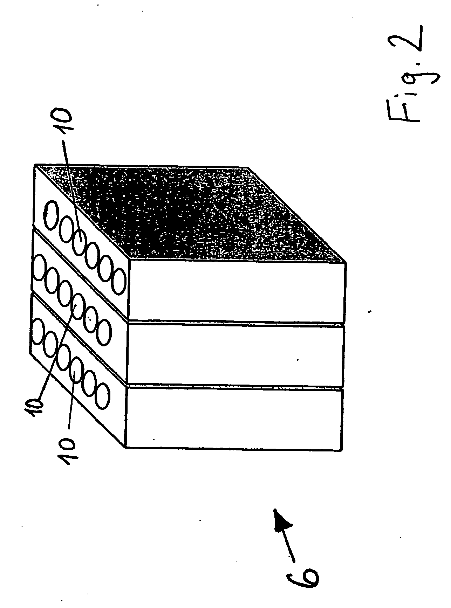

In Fig. 2 ist schematisch eine mögliche Variante eines Blocks von Injektorreihen 6 gemäß der Erfindung mit jeweils 6 Einzelinjektoren 10 dargestellt. Die Anzahl von Injektoren kann dabei beliebig sein und den Anforderungen hydraulisch oder produktionsabhängig angepasst werden. Wird im ersten Injektorteil die Luft möglichst gleichmäßig von allen Seiten bei niedrigst möglichem Druckverlust dem Freistrahl angeboten, bewirkt die Reihenbauweise eine ebenso gleichmäßige Blasenverteilung im Ausblasbereich der Injektorprallplatte. Es kommt zu wesentlich geringerer Agglomerierungsneigung der Blasen im Prall- und Ausblasbereich der Injektoreneinheiten und durch die günstigere Strömungsführung nach dem Mischraum in den Prallraum und Ausblasung kann die erzeugte enge Blasengrößenverteilung auch bis in den Flotationsbereich eingehalten werden. Die Gesamtbelüftung kann damit in einem günstigeren Blasengrößenspektrum betrieben werden - Vermeidung der Feinblasen ohne Gefahr der Agglomeration von größeren Blasen. Die Breite der Verteilung und die selektive Einstellung für eine optimale Erfassung der gewünschten Störstoffkorngrößen bleibt damit aufrecht.

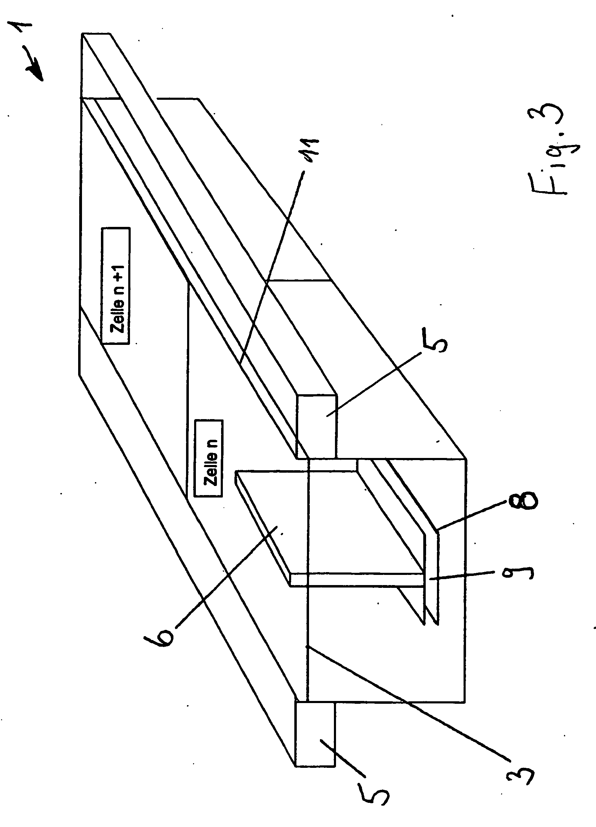

Fig. 3 stellt den Einbau einer erfindungsgemäßen Vorrichtung als Injektorreihe 6 in einer Flotationseinheit 1 dar, wodurch die Anlage mit beliebig großen Durchsätzen betrieben werden kann. Dargestellt sind zwei aufeinanderfolgende Zellen n und n+1. Durch Erhöhung der Länge der Überlaufkanten 11 kann die spezifische Überlaufgeschwindigkeit des abzuflotierenden Stoffes reduziert werden. Damit eine gleichmäßige Belastung der Überlaufkanten 11 gewährleistet ist, erfolgt der Einbau der Injektorreihe 6 mittig zur Suspensionsoberfläche 3. Die Injektorreihe 6 kann so angeordnet sein, dass die Suspension von oben, seitlich oder von unten in den Flotationsraum einströmt.

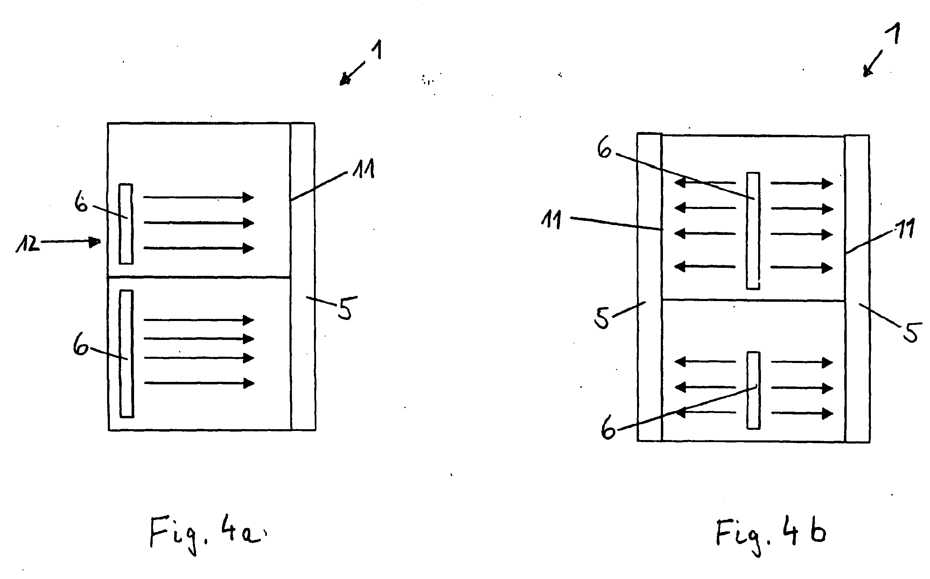

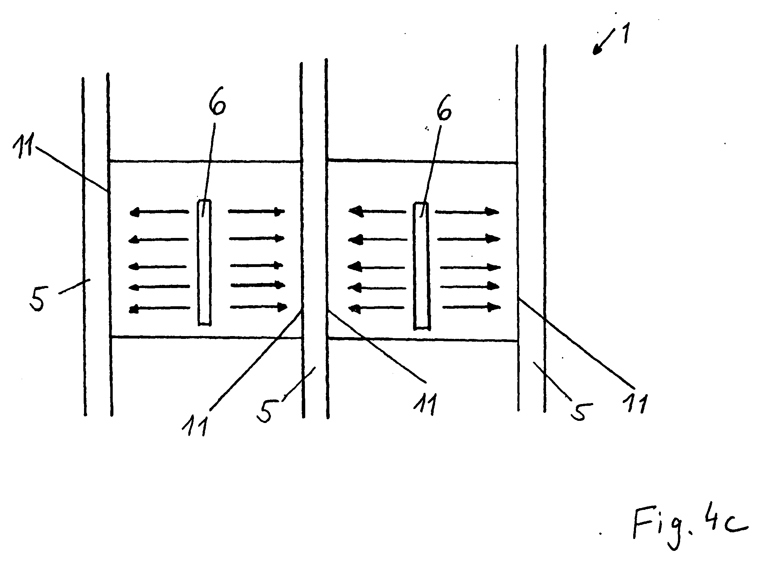

Fig. 4a, 4b und Fig. 4c zeigen eine schematische Draufsicht auf jeweils zwei Folgezellen mit unterschiedlich angeordneten Injektorreihen 6. Die Aufspreizung der Injektorreihen 6 in axialer Richtung fördert einerseits einen gleichmäßigen Schaumfluss über die gesamte Zellenlänge in Richtung Überlaufkante 11, anderseits kann die Absaugung des Gut- oder wiederzubelüftenden Stoffes unter Vermeidung weitestgehender Kurzschlussströme durchgeführt werden. Damit können die Faserstoffverluste reduziert werden. Die erfindungsgemäße Vorrichtung ist weiters in der Lage mehr Luft einzubringen und verbessert somit auch die Entfernung von Störstoffen. Fig. 4 a zeigt eine Floatationszelle 1 mit einer Schaumrinne 5, wobei hier die Injektorreihen 6 an der der Überlaufrinne 5 gegenüberliegenden Seite 12 angeordnet sind. Bei Flotationszellen 1 mit zwei Schaumrinnen 5, wie in Fig. 4b dargestellt, werden die Injektorreihen 6 in der Mitte angeordnet, so dass allseitig ein gleichmäßiger Schaumfluss bei kurzen Strömungswegen erfolgt. Damit kann auch die Leistung der Flotationszelle 1 erhöht werden. Die Variante in Fig. 4c zeigt zwei parallel angeordnete Flotationszellen, die drei Schaumrinnen 5 aufweisen, wobei die beiden Zellen ebenfalls hintereinander geschaltet sein können, eine derartige Anordnung aber vorzugsweise bei einer Steigerung des Durchsatzes als Parallelschaltung eingesetzt wird.

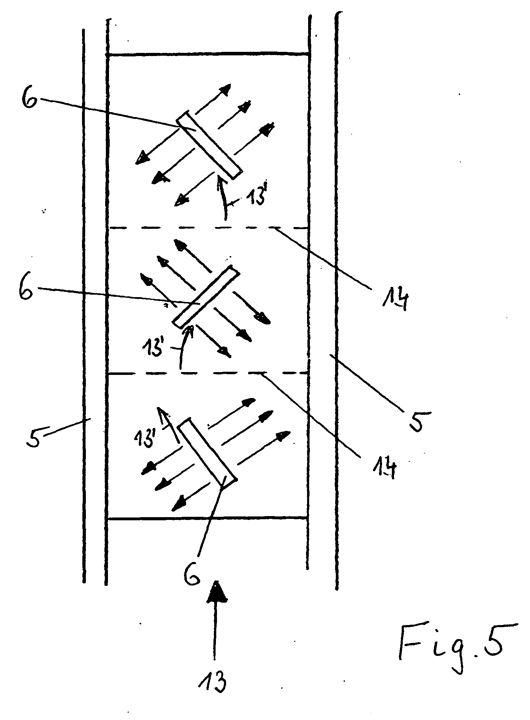

Fig. 5 zeigt nun eine Anordnung der Injektorreihen 6 in einer Form, dass die Strömung 13 der Suspension durch die Flotationszellen durch die Injektorreihen 6 in Richtung 13' abgelenkt wird, wodurch sich der Strömungsweg und damit die Verweilzeit verlängert. Es können dabei ein oder mehrere Injektorreihen 6 in einer Flotationszelle 1 angeordnet sein. In Fig. 5 ist strichliert eine Trennung 14 zwischen einzelnen Flotationszellen als Möglichkeit angedeutet.

## Patentansprüche

1. Vorrichtung zum Abtrennen von Feststoffen aus Flüssigkeiten mittels Flotation, insbesondere zur Abtrennung von Störstoffen und Druckfarbpartikel aus Faserstoffsuspensionen, mit mehreren Injektoren (10), die innerhalb einer Flotationszelle (1) vorgesehen sind, wobei die Injektoren (10) in einer Reihenbauweise angeordnet sind, **dadurch gekennzeichnet, dass** die Reihe (6) einen gemeinsamen Diffusor (9) und eine gemeinsame Prallplatte (8) für alle Injektoren (10) aufweist und dass mehrere, vorzugsweise zwei bis vier Injektorreihen (6) zu einem Block zusammenfügbar sind, wobei die Injektorreihen (6) in Strömungsrichtung der Suspension durch die Flotationszellen, insbesondere in axialer Richtung, in der Flotationszelle (1) angeordnet sind.

2. Vorrichtung nach Anspruch 1, **dadurch gekennzeichnet, dass** bei einer Flotationszelle (1) mit einer Schaumrinne (5) die Injektorreihen (6) an der der Schaumrinne (5) gegenüberliegenden Seite (12) der Flotationszelle (1) angeordnet sind.

3. Vorrichtung nach Anspruch 1, **dadurch gekennzeichnet, dass** bei einer Flotationszelle (1) mit zwei oder mehreren Schaumrinnen (5) die Injektorreihen (6) in der Mitte der Flotationszelle (1) angeordnet sind.

## Claims

1. Device for separating solids from liquids by means of flotation, particularly for separating impurities and ink particles from fibre suspensions, with several injectors (10) that are provided inside a flotation cell (1), where the injectors (10) are arranged in rows, **characterised by** the row (6) having a joint diffuser (9) and a joint baffle plate (8) for all injectors (10) and by several injector rows (6), preferably two to four, being combined in a block, the injector rows (6) being arranged in the flow direction of the suspension through the flotation cells, particularly in axial direction, inside the flotation cell (1).

2. Device according to Claim 1, **characterised by** the injector rows (6) being arranged on the side (12) of the flotation cell (1) opposite the foam channel (5) in a flotation cell (1) with a foam channel (5).

3. Device according to Claim 1, **characterised by** the injector rows (6) being arranged in the middle of the flotation cell (1) in a flotation cell (1) with two foam channels (5) or more.

## Revendications

1. Dispositif de séparation de solides à partir de liquides moyennant la flottation, notamment pour la séparation d'impuretés et de particules d'encre à partir de suspensions de pâte fibreuse, comportant plusieurs injecteurs (10) dans une cellule de flottation (1), les injecteurs (10) étant disposées en rangées, **caractérisé en ce que** la rangée (6) comporte un diffuseur (9) commun et un butoir de déviation (8) commun pour tous les injecteurs (10) et que plusieurs rangées d'injecteurs (6), de préférence deux à quatre, peuvent être rassemblées en bloc, les rangées d'injecteurs (6) étant disposées au sens d'écoulement de la suspension à travers les cellules de flottation, notamment au sens axial dans la cellule de flottation (1).

2. Dispositif selon la revendication 1, **caractérisé en ce que** les rangées d'injecteurs (6) d'une cellule de flottation (1) avec canal à mousse (5) sont disposées au côté (12) de la cellule de flottation (1) opposé au canal à mousse (5).

3. Dispositif selon la revendication 1, **caractérisé en ce que** les rangées d'injecteurs (6) d'une cellule de flottation (1) comportant deux ou plusieurs canaux à mousse (5) sont disposées au centre de la cellule de flottation (1).
